Europäisches Patentamt

European Patent Office

Office européen des brevets

(11) Veröffentlichungsnummer: **0 495 144 A1**

## EUROPÄISCHE PATENTANMELDUNG

(21) Anmeldenummer: **91100495.0**

(51) Int. Cl.⁵: **B23K 7/10, F23D 14/78**

(22) Anmeldetag: **17.01.91**

(43) Veröffentlichungstag der Anmeldung:
**22.07.92 Patentblatt 92/30**

(84) Benannte Vertragsstaaten:
**AT BE CH DE ES FR GB GR IT LI LU NL SE**

(71) Anmelder: **FA. HORST K. LOTZ**
**Robert-Bosch-Strasse 3**
**W-6238 Hofheim-Wallau(DE)**

(72) Erfinder: **Lotz, Horst K.**
**Robert-Bosch-Strasse 3**
**W-6238 Hofheim-Wallau(DE)**
Erfinder: **Lotz, Mattias**
**Kiefernweg 13**
**W-6200 Wiesbaden-Delkenheim(DE)**

(54) **Langzeit- und Mehrzweck-Hochleistungsschneidbrenner.**

(57) Durch einen erweiterten Düsenkopf (1) mit außermittiger und mehrfacher Düsenaufnahme trotz mit den Schneidkanälen fluchtender Schneidsauerstoffzufuhr, kann durch Drehen des Düsenkopfes (1) oder des ganzen unteren Brenners die arbeitende Schneiddüse zur Abstimmung auf eine vorgegebene Schneidlinie gebracht werden; bei Mehrfach-Ausstattung kann durch Drehen ein Probedickenabstand zwischen zwei Schneiddüsen (2) gewählt oder bei Störung eine Reservedüse schnell zum Einsatz gebracht werden. Die Düsen für Probeschneiden oder Reserve sind hinter einer Schutzplatte (12) gegen Spritzer und Beiflammen abgedeckt. Die Schutzplatte (12) kann auch als Leitblech für eine sichere Zündflamme dienen. Die flexible Verbindung zwischen dem verstellbaren Brenner und seiner Gasversorgung erfolgt durch entsprechend geformte und bemessene Metallrohrleitungen.

Bild 1

Bild 2

Zum Heizen, Schweißen, Brennschneiden und Flämmen in Stahl- und Walzwerken, Schiffswerften, Stahl- und Maschinenbaubetrieben werden Brenner eingesetzt, die aus Schaftrohr und mittig eingesetzter Heiz-, Brenn- oder Schneiddüse bestehen. Durch das ungekühlte oder gekühlte Schaftrohr wird der die Düse tragende Brennerkopf durch Rohre mit Heizgas, Heizsauerstoff, evtl. auch Luft und mit Schneidsauerstoff versorgt. Von da fließen sie in die eingeschraubte, vielleicht auch eingeklemmte Düse, um hier auf die richtige Mischung und Austrittsgeschwindigkeit gebracht, nach dem Austritt mit gewünschter Heizwirkung verbrennen oder als gut geformter Schneidstrahl Werkstücke aus Stahl mit geeignetem Vorschub brennend zu zerteilen. Ohne den Schneidsauerstoffstrahl gilt das für Heiz- und Schweißbrenner mit einem weicheren und großvolumigen Flämmstatt Schneidstrahl auch für Flämmbrenner zum autogentechnischen Abhobeln von Stahloberflächen.

Beim Brennschneiden dickerer und wärmerer Werkstücke aus Stahl, z. B. beim Knüppel-, Block- und Brammenschneiden in Stahl- und Walzwerken, insbesondere aber beim Unterteilen heißer, im ständigen Durchlauf als Strangguß erzeugter Stahlstränge ergeben sich Forderungen, denen oft nur umständlich und unvollkommen durch den Einsatz mehrerer oder den betriebsstörenden Austausch herkömmlicher Brenner entsprochen wird.

Dazu gehört das zwischen die üblichen Unterteilarbeiten gelegentlich eingestreute Abtrennen von Probescheiben zur Qualitätsüberwachung des vergossenen Materials. Zur Verbesserung von Schneidwirkung, Vermeidung von Verwerfungen oder metallurgischen Behandlung wird bisweilen am Schneidrand mit zusätzlichen Brennern bzw. Düsen zusätzlich Hitze eingebracht.

Bei langandauernden Verfahren die z.B. mit Schneiden oder Flämmen verbunden sind muß trotz schlechter Zugänglichkeit die Schneid-, Flämm- und auch die Heizdüse wegen Verschleiß oder Verschmutzung, z. B. durch hochspritzende Schneidschlacke und Funkenflug, in relativ kurzen Zeitabständen ausgetauscht werden.

In allen drei vorgenannten Fällen wird der oder die Hauptbrenner durch einen oder mehrere Brenner ergänzt oder ausgetauscht, was kostspielig und schwierig ist.

Die nachstehend erläuterte Erfindung beansprucht eine insgesamt gesehen wirtschaftliche, sichere und auch sonst vorteilhafte Antwort auf die für alle drei obigen Fälle und vielleicht andere, ähnliche gestellte Fragen nach besserem Gerät zu geben.

Grundsätzlich wird dazu der jeweilige Brenner im Durchmesser wesentlich größer hergestellt und die Ergänzungs- und Austauschdüsen werden exzentrisch im gleichen Düsenkopf so angeordnet, daß sie

- entweder vor oder hinter, auf jeden Fall aber auch neben der Haupt-Schneiddüse heizen,
- oder daß nur durch Drehen oder Verschieben des Brenners oder auch nur des Düsenkopfes eine andere bisher geschützte Düse, anstelle einer inzwischen ungenügend arbeitenden Düse, eingesetzt werden kann,
- oder daß zum Schneiden von Probeschnitten zwei hintereinanderliegende oder nebeneinanderliegende Düsen durch Drehen und Verschieben des Brenners in eine, wenn auch versetzte, Lage nebeneinander mit einem Abstand entsprechend der Probendicke gebracht werden kann, und dies nur zum Probeschneiden. Ansonsten bleibt die Probenschneiddüse geschützt hinter einer Schutzplatte wie sonst auch die Ersatz- oder auch nicht gebrauchten Heizdüsen.

Ein weiterer Vorteil dieser Erfindung ist das leichte Ein- und Nachstellen zweier aufeinanderzu schneidender Düsen in eine Flucht zum möglichst genauen und glatten Treffen zweier Schnitte. Das Verstellen des Brenners kann bei einfachen Anlagen preiswert von Hand z. B. beim Drehen mit einem vorteilhaften Tellerschlüssel zur Vermeidung von Biegemomenten durchgeführt werden oder auch mit einem ferngesteuerten Servoantrieb, bei geeigneter Ausführung der Gas-, Sauerstoff und Wasserver- und entsorgung z. B. durch Drehdurchführungen oder flexiblen Schlauch- oder Rohrzuleitungen.

Die Schutzplatte kann je nach Anbringung drehbar oder ortsfest sein und je nach Bedarf kleine oder größere Kreisausschnitte abdecken. Auch als Leitblech kann sie gleichzeitig Verwendung finden, wenn eine nicht gerade schneidende Düse mit verringertem Verbrauch als ständig brennende Zündflamme neben der Arbeitsdüse, die immer wieder abgeschaltet wird, brennt, oder wenn eine den Brenner mit Düsenkopf durchdringende hohle Welle mit Austrittsbohrung als Zündflammenbrenner verwendet wird.

In den Bildern 1 bis 19 sind erfindungsgemäße Ausführungen dargestellt.

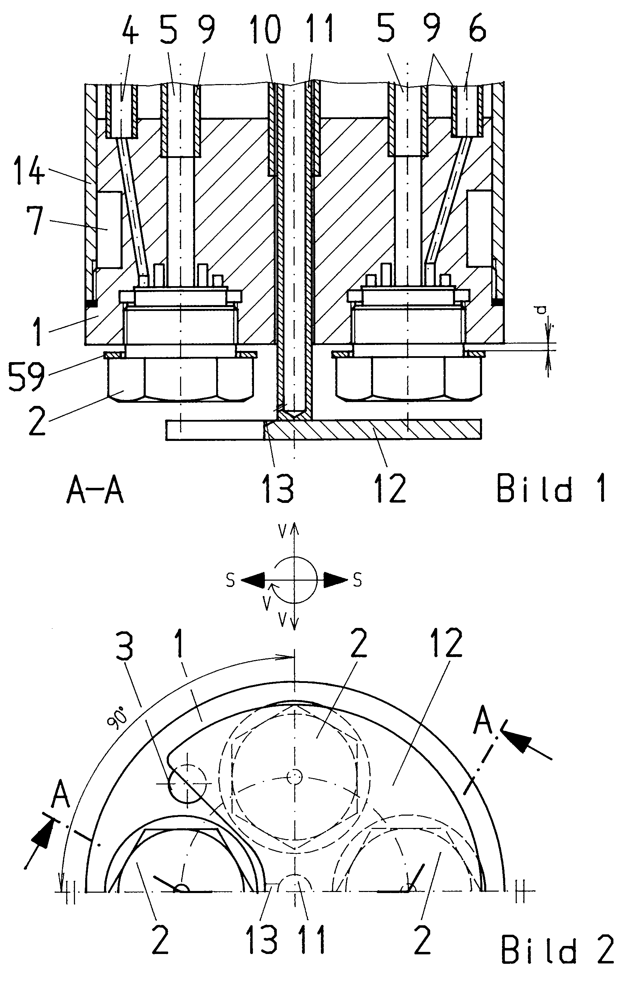

Bild 1 zeigt den Schnitt A-A durch einen Düsenkopf 1 mit Schneiddüsen 2 und Schaftrohransatz 13 und Bild 2 eine Ansicht desselben von unten.

Dabei ist 1 der Düsenkopf mit den exzentrisch angeordneten Schneiddüsen 2, dem über übliche Versorgungsrohre 9, Versorgungsbohrungen und Ringkanäle für Heizsauerstoff 4, Schneidsauerstoff 5 und Heizgas 6 die Medien zugeführt werden. Ein Kühlwasserumlauf 7 ist durch einen vom Schaftrohr 14 abgedeckten Ringkanal möglich. Die Mitte des Düsenkopfes 1 mit einer Hohlachse 10 verbunden ist durchbohrt und von einer hohlen Welle 11 durchdrungen, an der die die nicht betriebenen Schneiddüsen 2 (oder Heizdüsen) abdeckende Schutzplatte 12 mit einer Leitfuge 13 installiert ist. Das Bild 2 zeigt beispielsweise die Anordnung von 4 Schneiddüsen 2 von den 3 von der Schutzplatte 12 nach unten abgedeckt sind und die Bohrungen 3, die symmetrisch angeordnet zum biegungsfreien Verdrehen des Brenners dienen können.

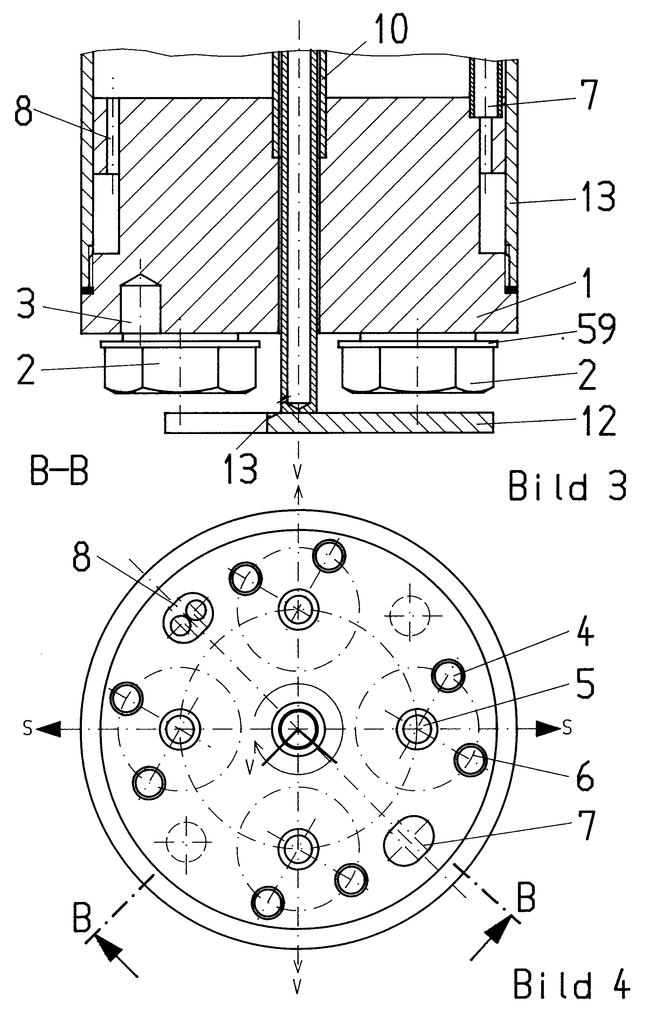

Bild 3 zeigt ebenfalls einen Schnitt B-B durch einen Düsenkopf 1 mit den zugeordneten Teilen Düsen 2, Schaftrohr 14, Kühlwasserzulauf und -umlauf 7 sowie den Kühlwasserablauf 8 ins Schaftrohr 14 und andeutungsweise auch andere schon aus Bild 1 bekannten Teile und Ausführungen.

Die Draufsicht auf den Düsenkopf Bild 4 zeigt die Anordnung der verschiedenen Versorgungsrohre bzw. Bohrungen für Heizsauerstoff 4, Schneidsauerstoff 5, Heizgas 6, Kühlwasser 7 und die Kühlwasserabfuhr 8 in das Schaftrohr 14. In der Mitte liegen Hohlachse 10 und die hohle Welle 11.

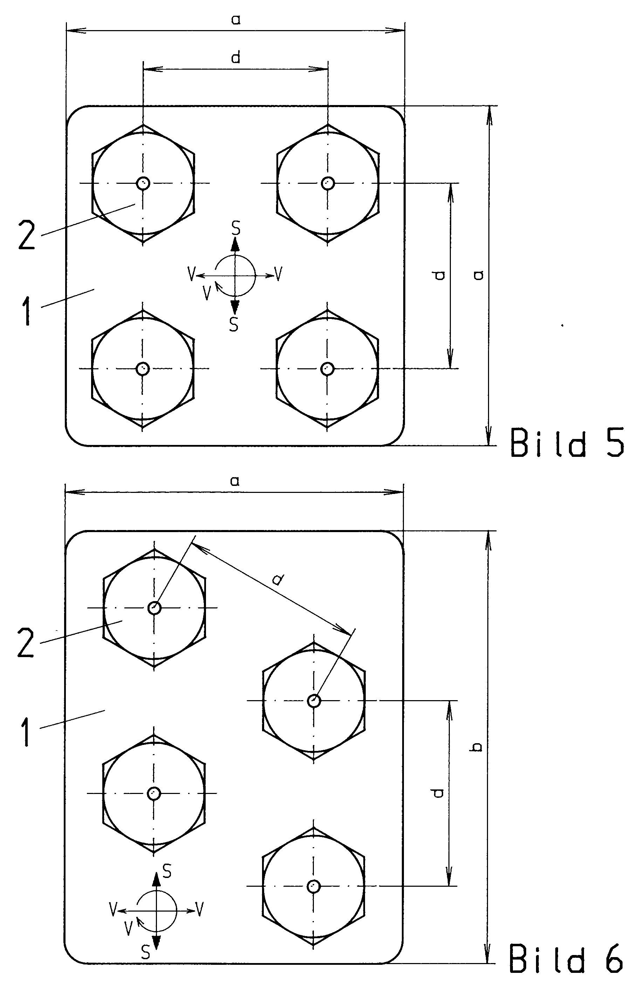

Das Bild 5 zeigt von unten ergänzend zu Bild 4 die erfindungsgemäße Anordnung von Schneiddüsen 2 im Quadrat mit den geringsten zum Ein- und Ausschrauben nötigen Abständen d, wodurch sich eine kleinste Abmessung des Düsenkopfes 1 a x a ergibt. Das zugehörige Schaftrohr kann ebenso quadratisch oder rund sein.

Das entsprechende Bild 6 zeigt eine rechteckige Anordnung der Schneiddüsen 2 im rechteckigen Düsenkopf 1 mit den Abständen d, was zur Düsenkopfgröße a x b führt. Auch andere Anordnungen sind vorstellbar. In allen Fällen wird von einer Schneidebene S, einer Verstellebene V und einer Verdrehbarkeit V ausgegangen, die mit großen Pfeilen S für die Schneidebene und kleinen für die Verstellung und Verdrehung angedeutet sind. Je nach Maschinenausführung können die Schneid- und Verstellebene vertauscht werden.

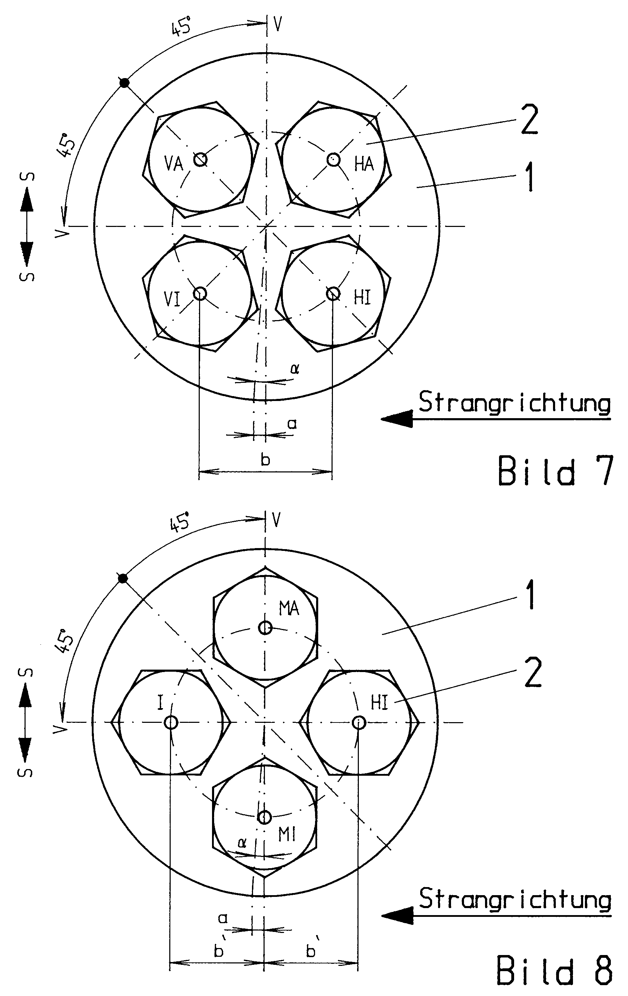

In Bild 7 ist eine Schneiddüsen (2)-Anordnung im Quadrat gezeigt, bei der durch Drehung des Düsenkopfes 1 um ein kleines Maß a oder einen kleinen Winkel $\alpha$ die Lage der Schneidebene S in Strangrichtung z. B. zum genauen Schneiden zweier Brenner gegeneinander gemeinsam in einer Schneidlinie genau eingestellt oder nachgestellt werden kann.

In Bild 7 wird die quadratische Anordnung von 4 Schneiddüsen 2 in einem runden Düsenkopf 1 gezeigt, die bezogen auf eine Werkstücklage z. B. eine Strangrichtung, die auch der Verstellrichtung entspricht und quer zur Schneidrichtung liegt, um ±45° gedreht werden können. Dabei kann die Schneiddüse 2 mit VA gekennzeichnet in die Stellung der Schneiddüse HA oder VJ gelangen.

Dabei bedeutet eine Düsenlage bezogen auf Strang und Maschine und Schneidrichtung (=nach innen):

VA Vorn Außen        HA Hinten Außen

VI Vorn Innen        HI Hinten Innen

Normal schneidet man mit der Schneiddüse 2 VI-Lage des einen Brenners gegen die Schneiddüse 2 VI des zweiten zum Gegeneinanderschneiden spiegelbildlich angeordneten Brenner. Zum Probeschneiden setzt man zum Beispiel zu den Schneiddüsen 2 in VI-Lage die Schneiddüsen 2 in HA-Lage ein, da der Probeschnitt erst später über einem Auffangbehälter beendet sein soll. Dazu ist auch eine Kobination der HA und in gleicher Linie liegender HI Schneiddüsen 2 möglich. Ein leichtes Verdrehen um das Maß a oder den Winkel $\alpha$ dient auch hier wie zuvor und später zum genauen Einstellen auf eine gemeinsame Flucht mit einem entgegen schneidenden Brenner.

Alle gerade nicht betriebenen Schneiddüsen 2 können als Reservedüsen oder Heizdüsen oder als Schneiddüsen für andere Schneidarbeiten, z. B. größere Dicke, ausgeführt sein.

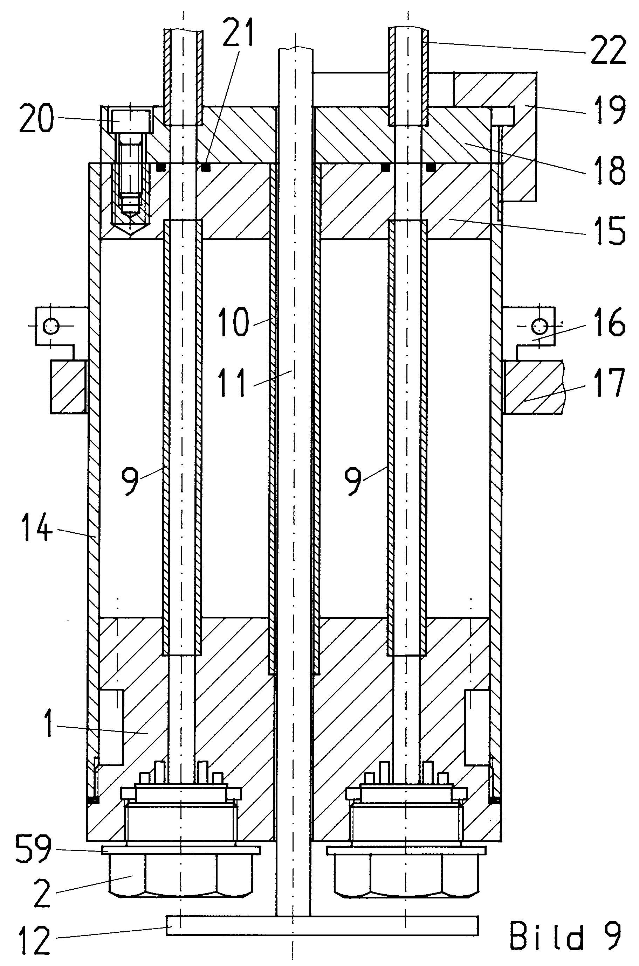

Das Bild 8 zeigt eine der in Bild 7 dargestellten Düsenanordnung der Schneiddüsen 2 im Düsenkopf 1 entsprechende Situation, lediglich um 45° verdreht als Spießkant-Ausgangslage mit ±45° Verdrehmöglichkeit.

Hierbei kann die Düsenlage MI = Mitte Innen als normal schneidende Schneiddüse 2 mit der Schneiddüse 2 H = Hinten als Probedüse angesehen werden, oder es gilt gleiches für die Düsenlagen V = Vorn und MA = Mitte Außen. Aufgrund dieser Ausgangslage gibt es auch andere Kombinationsmöglichkeiten bis hin zur Gleichlage mit der quadratischen Anordnung in Bild 7. Auch könnte bei MI = Schneiddüse 2 Mitte Innen als Hauptschneiddüse 2, die Schneiddüse MA Mitte Außen als Reserve und die Lagen V Vorn und H Hinten als zusätzliche Heizdüsen ausgeführt sein.

Das Bild 9 zeigt einen einfachen aber vollständigen Brenner mit 4 Düsen zum Teil im Schnitt. Außer den bereits bekannten Einzelheiten sind hier durchgehende Versorgungsrohre 9, Hohlachse 10 und hohle Welle 11 innerhalb des Schaftrohres 14 dargestellt und wie sie in eine Anschlußplatte 15 münden, deren Bohrungen und Ringkanäle mittels O-Ringen 21 gegen die Umgebung abgedichtet sind, wenn die Deckelplatte 18 mittels Deckelmutter 19 auf das Schaftrohr 14 geschraubt wird. Die hier austretenden Versorgungsrohre 22 sind mittels Rohren oder Schläuchen mit einer Versorgungslage zum Zu- und Abschalten von 1, 2 oder mehr Düsen je nach Betriebsart verbunden. Durch diesen Anschluß kann der Brennerwechsel sehr beschleunigt werden, sonst wären bei 4 Düsen mindestens 14 Verschraubungen zu lösen und zu schließen. Anstelle mit einer großen Deckelmutter 19 kann die Deckelplatte 18 auch mit mehreren Deckelschrauben 20 angeschraubt werden. Am Schaftrohr 14 ist ein Stellring 16 in geeigneter Höhe angeklemmt, auf diesem ruht der Brenner, wenn er in die an einer Maschine befestigten Halteplatte 17 eingesteckt ist.

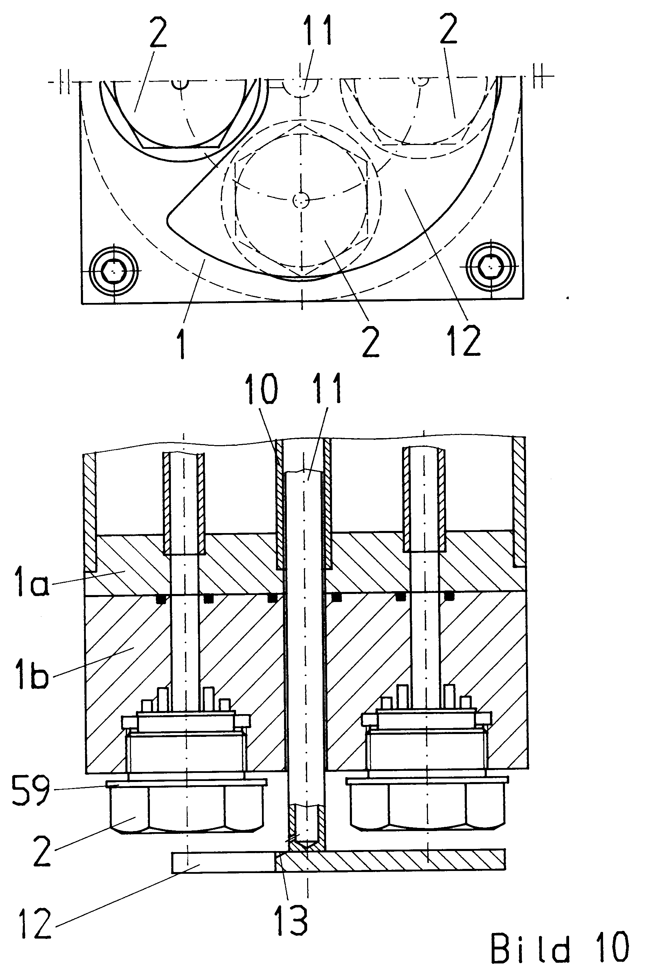

Eine andere vorteilhafte Ausführung eines Brenners nach den Ansprüchen der Erfindung ist in Bild 10 dargestellt.

Statt wie in Bild 9 die Düsenaufnahme 1 als einteiliges Grundbauteil als Brenner selbst oder zum Anbau eines haltenden und schützenden Schaftrohres 14 auszuführen, wird nach Bild 10 die Düsenaufnahme in einen Düsenkopfflansch 1a und einen Düsenkopfkörper 1b aufgeteilt und mit zwischengelegten O-Ringen 20 an den Durchgangsbohrungen zusammengeschraubt. Ansonsten gelten die nach Bild 9 gemachten Angaben, jedoch ist jetzt ein auch gewichts- , zeit- und kostenmäßig vorteilhafterer Austausch des runden oder viereckigen Düsenkopfkörpers möglich. Jetzt muß zum Austausch nicht der ganze schwere Brenner aus seiner Halterung genommen werden.

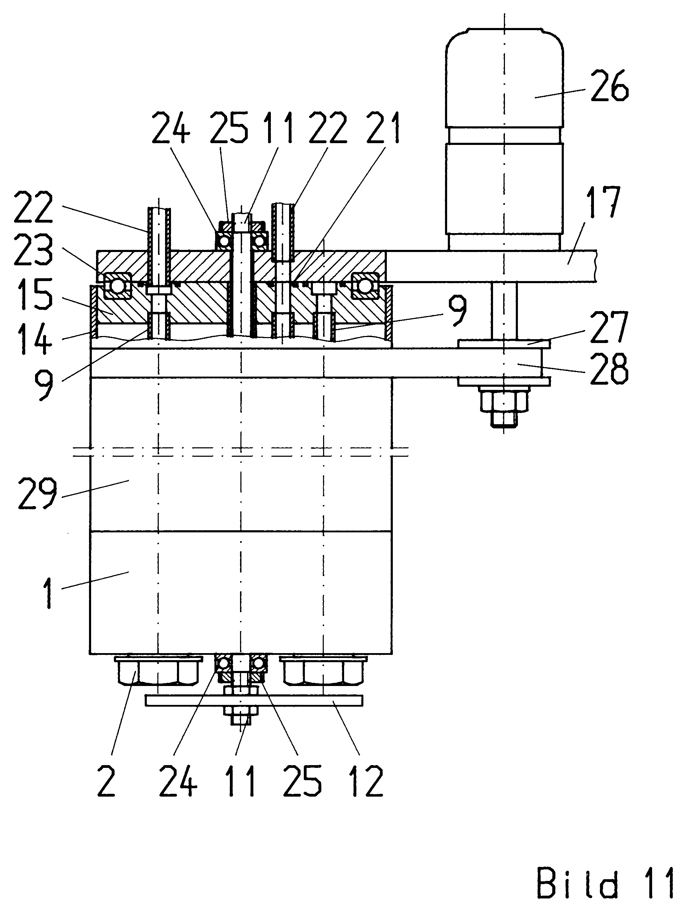

Nach Bild 11 ist eine erfindungsgemäße Aufhängung des Brenners mit Düsenkopf 1, Schneiddüse 2, den Versorgungsrohren 9, dem Schaftrohr 14, der Anschlußplatte 15, den O-Ringen 21 usw. dergestalt vorgesehen, daß zwischen der letzteren und der tragenden Halteplatte 17 ein Drehlager 23 vorgesehen ist, und der ganze Brenner über das obere Wellenlager 24 und die Wellenmutter 25 an der hohlen Welle 11 mit dem unteren Wellenlager 24 mit Wellenmutter 25 als tragendem Teil hängt. Ein ebenfalls auf die Halteplatte 17 montierter Motor 26 mit Triebrad 27 kann mittels eines Triebbandes 28 den Brennerkörper 29 umfassend entsprechende Verdrehungen vornehmen.

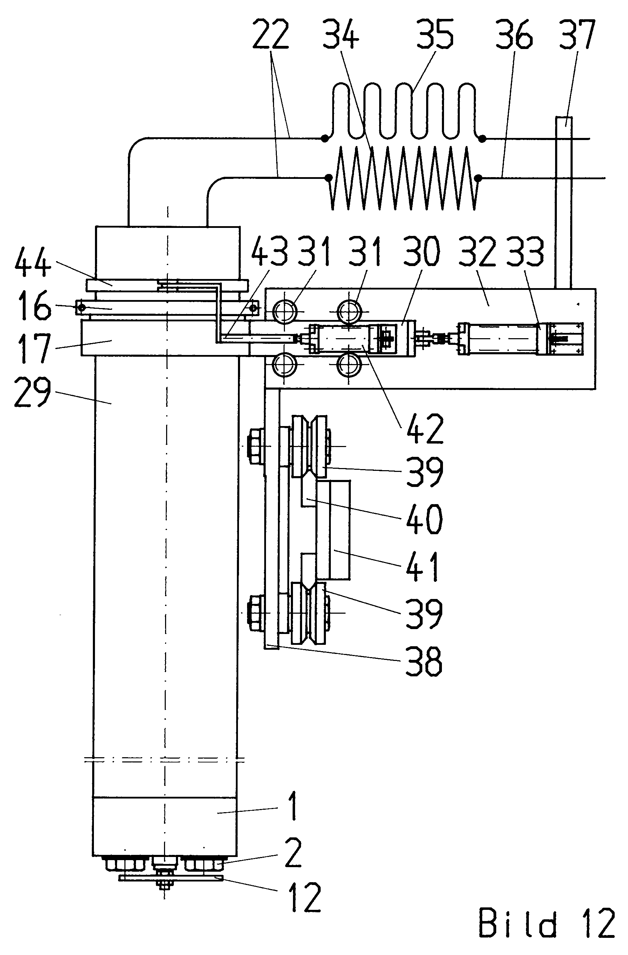

In Bild 12 ist eine andere erfindungsgemäße Ausführung des Verstellantriebes zum jeweiligen Einsatz der verschiedenen Schneiddüsen 2 dargestellt, hier wird eine einfache, geradlinige Verstellung des Brennerkörpers 29 vor oder zurück mit einem Verdrehantrieb kombiniert. Ein Haltearm 30 trägt die bekannte Halteplatte 17 mit dem darüber liegenden Stellring 16 und wird selbst von Verstellrollen 31 auf einer Verstellplatte 32 geführt und von einem Verstellantrieb 33 z. B. einem Zylinderkolbensystem hin oder her verschoben. Eine Verstellung wird durch eine flexible Verstellrohrspirale 34 oder entsprechende Schläuche 35 ermöglicht, die die Zuführungsrohre 22, mit festen Rohren 36 durch einen Rohrhalter 37 gehalten, verbindet.

Die Verstellplatte 32 sitzt fest verbunden auf dem mit Schneidgeschwindigkeit verfahrbaren Brennerwagen 38, der mit den Laufrollen 39 auf den Laufschienen 40 an der Laufbahn 41 hin und her fahren kann. Soweit ist eine lineare Verstellmöglichkeit dargestellt. Zum Verdrehen des Brennerkörpers 29 ist ein Drehzylinder 42 mit Drehkolben 43 auf dem Haltearm 30 montiert. Der Drehkolben 43 greift gelenkig an einen Drehhebel 44 am Brennerkörper 29 und kann nun zusätzlich zum schiebenden Verstellen den Brenner zum Einstellen oder Düsenwechsel auch verdrehen.

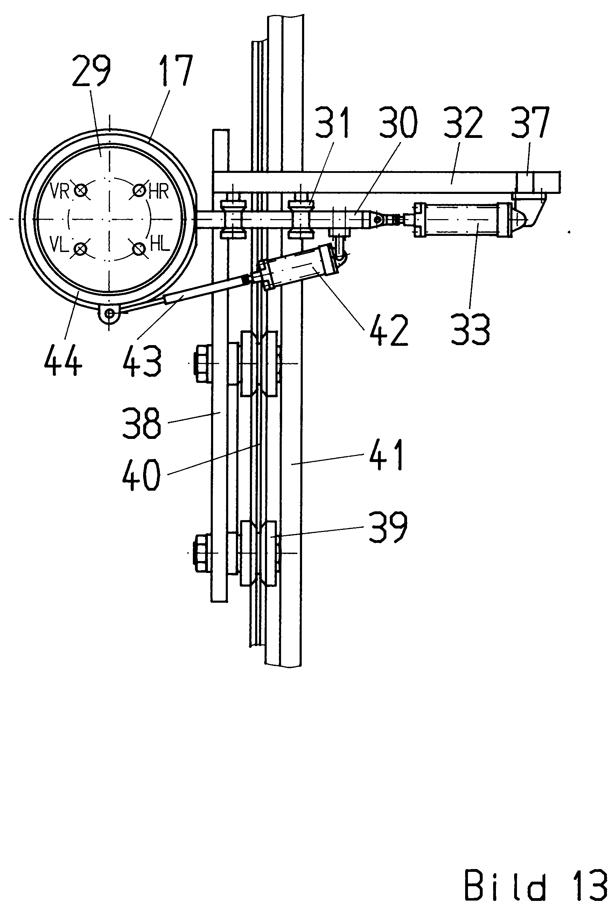

Im Bild 13 wird das mit Bild 12 beschriebene Verstell- und Verdrehsystem noch einmal in der Draufsicht zum besseren Verständnis dargestellt.

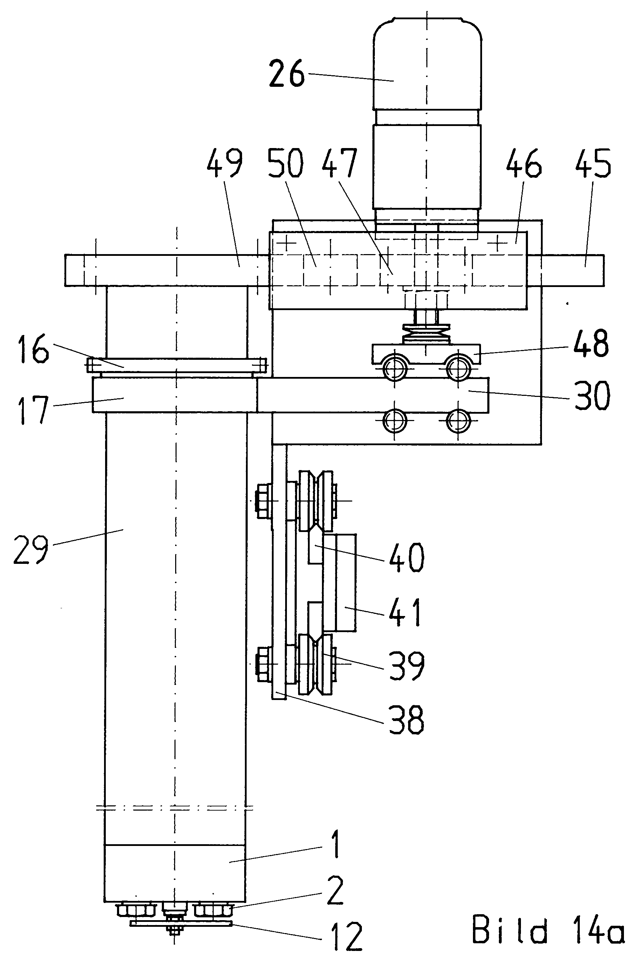

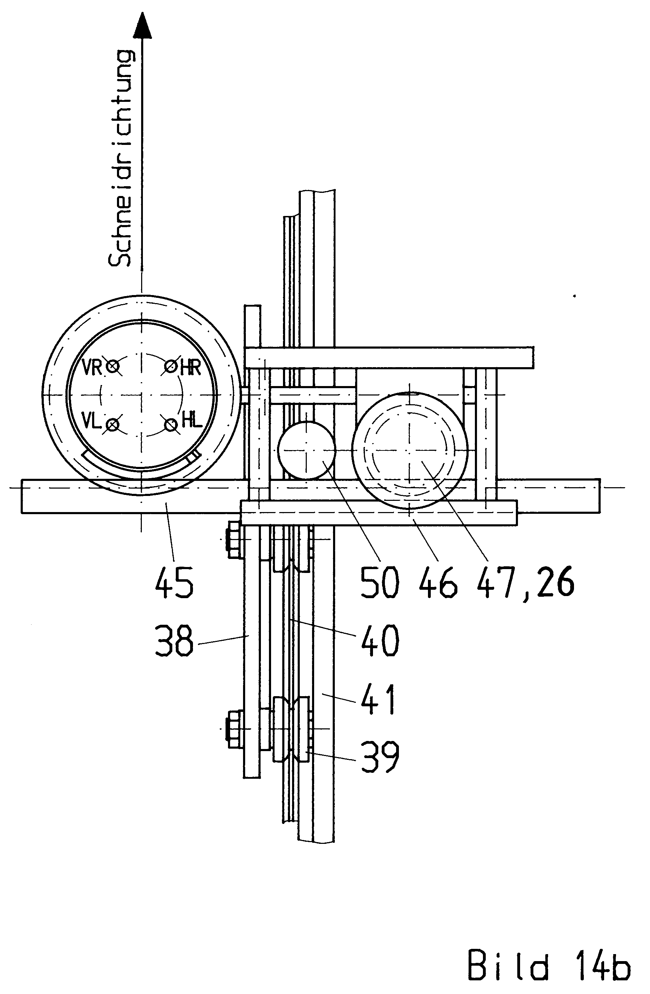

Gemäß Bild 14a und 14b (Draufsicht) gibt es aber auch eine kompaktere Antriebsmöglichkeit, bei der eine Schubzahnstange 45 in einer Schubstangenführung 46 durch ein Ritzel 47 an einem Motor 26, alles auf der Verstellplatte sitzend, verschoben werden kann und mit einem Zahnrad 49 am Brennerkörper 29, vorteilhaft auch auf der Anschlußplatte 15 oder Deckelplatte 18, kämmt und so eine Verdreh- oder Verschiebemöglichkeit ergibt. Natürlich erscheint es sinnvoll, die Schubstangenführung 46 mit einem Stützrad 50 zu ergänzen.

Durch unterschiedliche Reibungswiderstände zwischen Haltearm 30 und Verstellrollen 31 einerseits und der Drehlagerung des Brenners andererseits kann eine Verstellung durch die eine oder andere Verstellart bevorrechtigt vorgenommen werden. Zu diesem Zweck läßt sich die Verdrehung des Brennerkörpers 29 mit Anschlägen fest begrenzen und eine Bremse 48 verhindert, daß die lineare Bewegung beginnt, bevor die Anschläge erreicht sind. Durch eine entsprechende Aufeinanderfolge von Schieb- und Zugbewegungen mit am Ende genauem Verdrehen lassen sich alle notwendigen Lagen für die Schneiddüsen 2 erreichen.

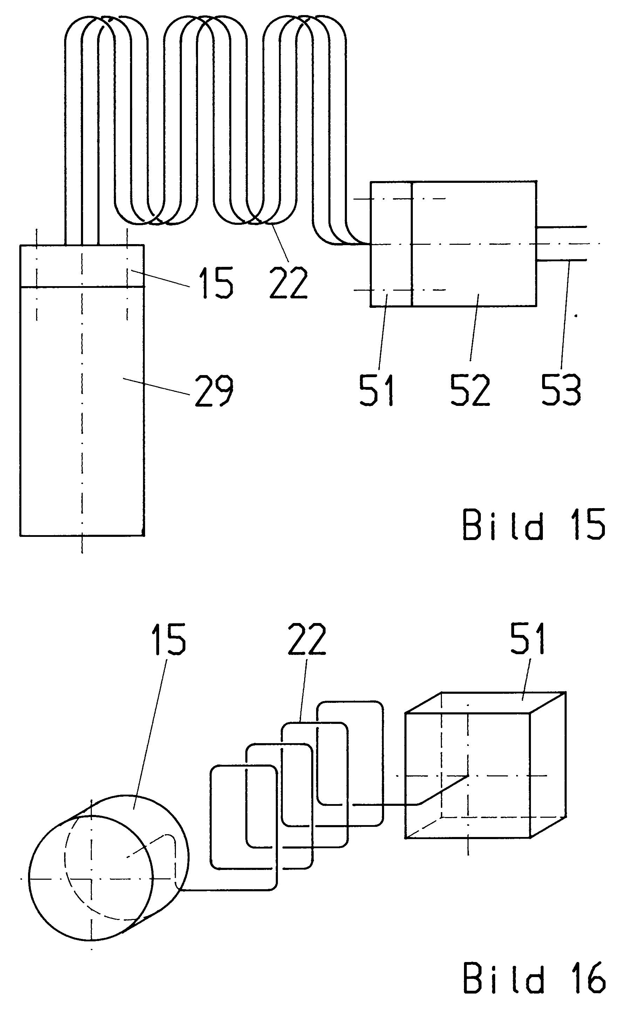

Im Bild 15 und 16 sind zwei Ausführungsformen der Verbindung mit Zuführungsrohren 22 zwischen der Anschlußplatte 15 des Brenners und der Verteilerplatte 51, die zur Gasesteuerung 52 mit Hauptzuleitungen 53 führen, dargestellt. Anstelle von flexiblen Gummi- oder Teflonschläuchen können unter Ausnutzung der Elastizität ohne bleibende Verformung und mit geringen Kräften auch Rohre aus Edelstahl in geeigneter Länge mit geeigneter Form als Zuführrohre 22 eingesetzt werden. Da die Verstellwege der Schneiddüsen 2 beispielsweise auf ±75 mm und ±45° entsprechend ±75mm aber nicht völlig linear addierend beschränkt ist, kommt man mit einer relativ geringen Gesamtrohrlänge aus, die nach Bild 15 die Zuführungsrohre als Wellen- oder auf und ab oder hin und her gehende Bogenausführung und in Bild 16 als runde oder eckige Spirale zur konstruktiven Unterbringung benötigter Rohrlängen eingesetzt wird.

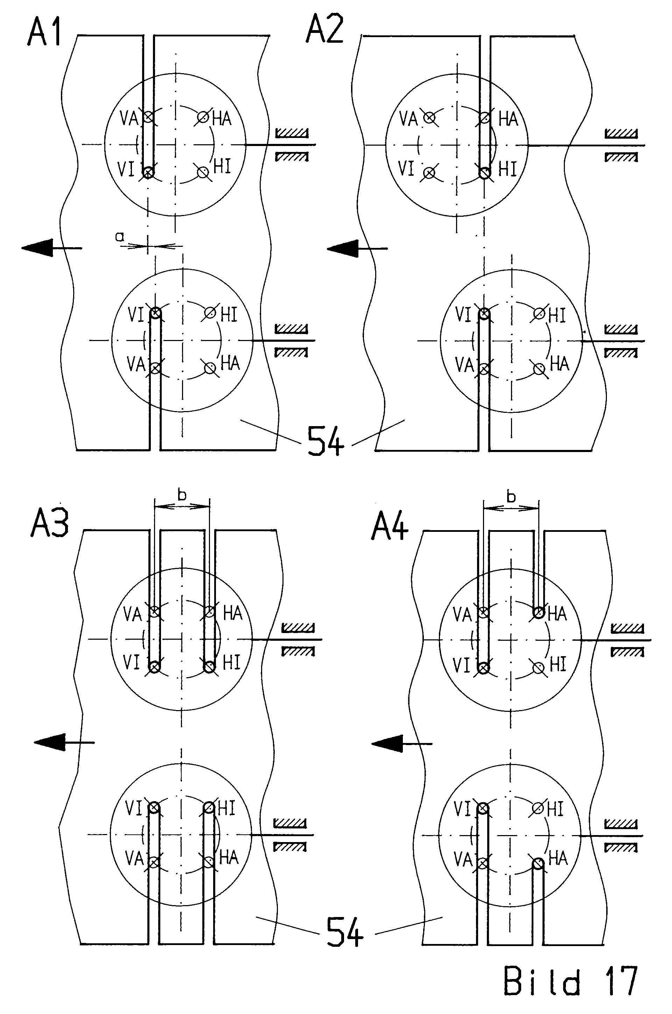

Im Bild 17 sind mit den zuvor erläuterten Lagebezeichnungen VA HA VI HI verschiedene Einsatzmöglichkeiten von mit 4 exzentrisch angeordneten Schneiddüsen 2 beim Gegeneinanderschneiden von 2 Brennern an einem Schnitt zum Zerteilen einer Bramme 54 dargestellt, wobei einmal bei A die vorderen Schneiddüsen 2 VI und einmal bei A2 nach verschiebendem Verstellen die hinteren Schneiddüsen 2 HI eingesetzt sind, die sich hier ohne Schneidzeitverlängerung austauschen lassen.

Die Verwendung der außen liegenden Schneiddüsen 2 bedeutet eine Verlängerung des von einer Schneiddüse alleine zu schneidenden Restes vor dem völligen Trennen der Bramme 54. Nach A3 kann man die jeweils inneren Schneiddüsen VI und HI zum trennenden Schneiden und zum Probeschneiden verwenden und nach A4 ein entsprechendes vorn und innen liegendes Paar (VI/VI) und zum Probeschneiden ein hinten und außen liegendes Paar, (HA/HA) damit die Probe später nach dem Trennen der Bramme 54 an vielleicht vorgesehener Stelle abfällt. Andere Kombinationen sind möglich.

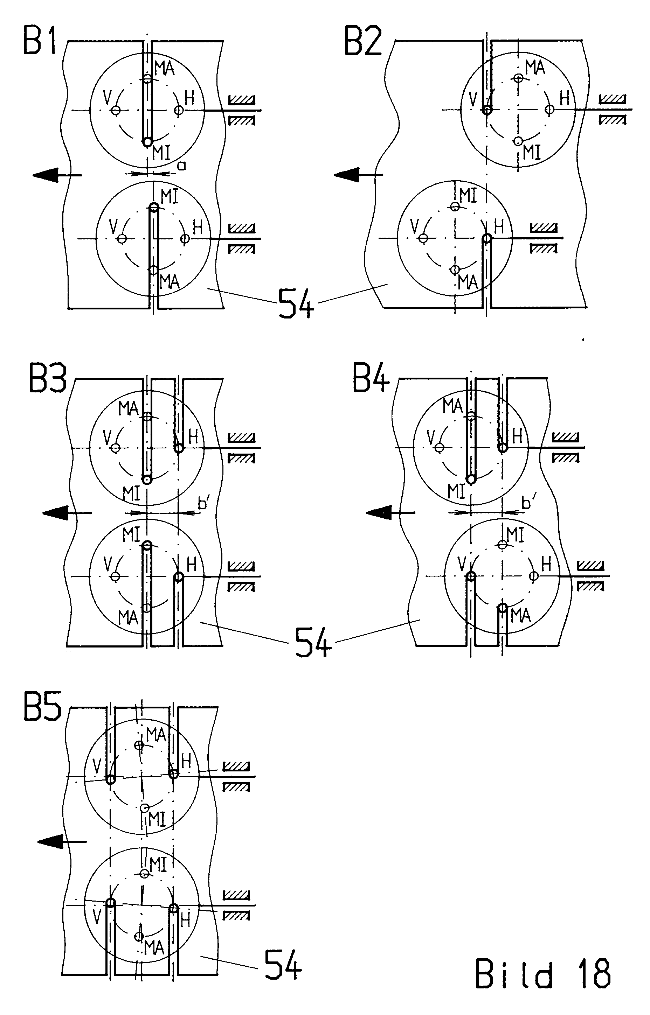

Das Bild 18 gibt nun sicherlich leicht verständlich verschiedene Lagesituationen von B1 bis B5 bei spießkant eingesetzten Brennern mit 4 Düsen insbesondere beim Gegeneinanderschneiden ohne und mit Probeschneiden an einer Bramme 54 wieder. Dabei zeigt B1 die notwendige Verstellbarkeit bei nicht fluchtenden Brennern.

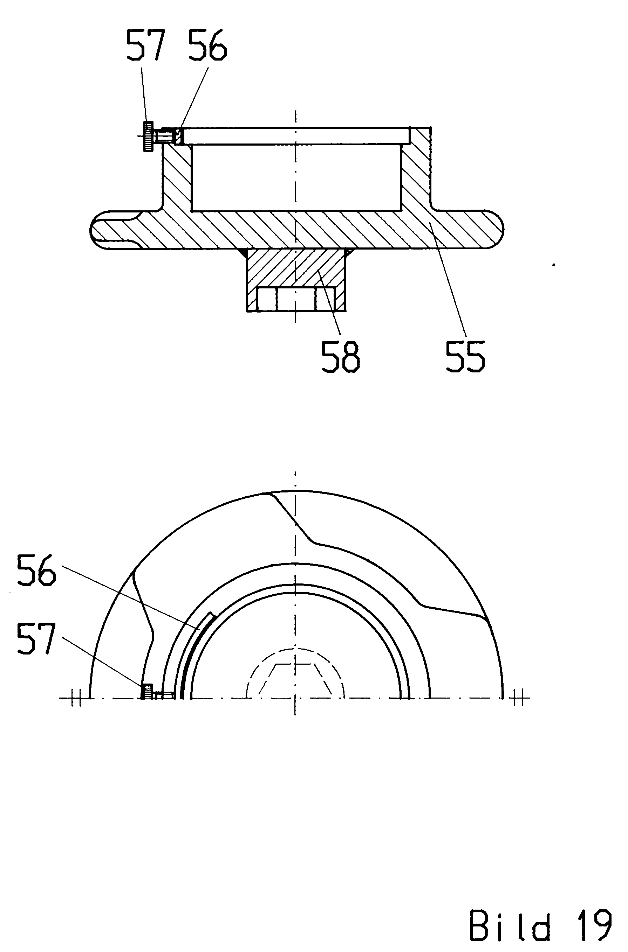

Da in der bekannten Praxis viele Brenner- und Düsenbeschädigungen durch Einsatz von großen Schraubschlüsseln in der Wirkung meist noch mit Hämmern verstärkt und ohne Gegendreh- bzw. Halteschlüsselverwendung entstanden sind, muß bei einer absichtlichen Brennerdrehung von Hand zum Einstellen und zum Austausch exzentrisch und fest eingeschraubter Düsen gemäß Erfindung ein besonderes Werkzeug verwendet werden. Sonst wird die Wirkung der neuen Brennerausführung bezüglich Wechsel- und Drehgeschwindigkeit sowie Sicherheit eingeschränkt. Zu diesem Zweck ist ein Tellerschlüssel 55 in Bild 19 dargestellt, der über das Düsenende des Brenners gesteckt und mittels Klemmstück 56 und Klemmschraube 57 an diesem festgeklemmt wird. Jetzt läßt sich der Brenner gleichmäßig und leicht verstellen und verdrehen.

Der Tellerschlüssel 55 hat auf der anderen Seite einen aufgeschweißten Düsenschlüssel 58 mit Innensechskant und erlaubt ebenso ein zweihändiges, gleichmäßiges Drehen beim Aus- und Einschrauben von Düsen, aufgrund von Durchmesser und Länge des Düsenschlüssels 58 auch in die Lücken einer Schutzplatte 12 passend.

Durch zurückspritzende Schlacketeilchen beim Brennschneiden werden nicht nur Nachbarbereiche der jeweils arbeitenden Schneiddüse 2 beschmutzt sondern, wenn auch in geringeren Mengen, bleibt die zwischen dem Schneidsauerstoff und Heizflammenstrahlen zurückspritzende Schneidschlacke an der Schneiddüse 2 haften. Damit setzt sich diese zu weil die Schlackespritzer leichter an schon anhaftender Schlacke anbacken als am gut wärmeleitenden Kupfer der Schneiddüse 2. Daher muß diese oft und in regelmäßigen Abständen durch Abbürsten, Abkratzen oder Abfeilen gereinigt werden. Diese wird durch schwierige Zugänglichkeit insbesondere bei Dauerbetrieb nur selten durchgeführt, so daß die Lebensdauer der Schneiddüse 2 sehr verkürzt wird.

Erfindungsgemäß sind die Schneiddüsen 2 durch eine Schutzplatte 12 an einer Welle 11, die durch den Düsenkopf 1 hindurchgeht, gegen Schlakespritzer geschützt bis auf die arbeitende Schneiddüse 2. Um andere Schneiddüsen 2 zum Einsatz zu bringen und entsprechend andere zu schützen ist die Schutzplatte 12 oder der Düsenkopf 1 gegeneinander verdreh- oder verschiebbar. Diese Dreh- oder Verschiebbarkeit kann man zur feilenden, kratzenden oder bürstenden Reinigung der Schneiddüse 2 verwenden, wenn die Schutzplatte 12 auf der entsprechenden Fläche eine Bürste, eine geeignete Feile oder einen Kratzer trägt, diese Werkzeuge zum Vermeiden eines Verhakens Anlaufschrägen oder ähnlich besitzen, leicht angedrückt werden können oder sind und die Dreh- oder Verschiebebewegung fernbetätigt durchgeführt werden kann. Dieses ist kein zusätzlicher Aufwand, da bereits für den Wechsel der arbeitenden Schneiddüse 2 und den Schutz der anderen Schneiddüsen 2 durch die Schutzplatte 12 vorgesehen.

Langzeit- und Mehrzweck-Hochleistungsschneidbrenner

Legende

| | |
|---|---|
| 1 | Düsenkopf |
| 1a | Düsenkopfflansch |
| 1b | Düsenkopfkörper |
| 2 | Schneiddüse |
| 3 | Schlüsselbohrung |
| 4 | Heizsauerstoff |
| 5 | Schneidsauerstoff |
| 6 | Heizgas |
| 7 | Kühlwasserzufuhr und -umlauf |
| 8 | Kühlwasserabfuhr |
| 9 | Versorgungsrohre |
| 10 | Hohlachse |
| 11 | Welle |
| 12 | Schutzplatte |
| 13 | Leitfuge |
| 14 | Schaftrohr |
| 15 | Anschlußplatte |
| 16 | Stellring |
| 17 | Halteplatte |
| 18 | Deckelplatte |
| 19 | Deckelmutter |
| 20 | Deckelschraube |
| 21 | O-Ring |
| 22 | Zuführrohr |
| 23 | Drehlager |
| 24 | Wellenlager |
| 25 | Wellenmutter |

26 Motor
27 Triebrad
28 Triebband
29 Brennerkörper
30 Haltearm
31 Verstellrollen
32 Verstellplatte
33 Verstellantrieb
34 Verstellrohrspirale
35 Verstellschlauch
36 Rohr
37 Rohrhalter
38 Brennerwagen
39 Laufrollen
40 Laufschienen
41 Laufbahn
42 Drehzylinder
43 Drehkolben
44 Drehhebel
45 Schubzahnstange
46 Schubstangenführung
47 Ritzel
48 Bremse
49 Zahnrad
50 Stützrad
51 Verteilerplatte
52 Gasesteuerung
53 Hauptzuleitung
54 Bramme
55 Tellerschlüssel
56 Klemmstück
57 Klemmschraube
58 Düsenschlüssel
59 Sicherungsscheibe

**Patentansprüche**

1. Langzeit- und Mehrzweck-Hochleistungsschneidbrenner für das thermochemische Unterteilen von Werkstücken, dadurch gekennzeichnet, daß der Brenner aus mindestens einem als Platte oder Block beliebiger Länge ausgebildeten Düsenkopf besteht, in den auf der unteren Seite mindestens eine Brenndüse weit außermittig, vorzugsweise am Rand des Düsenkopfes eingesetzt ist, und dieser Düsenkopf um seine senkrechte Mittelachse drehbar ausgeführt und waagerecht verschiebbar gelagert ist. Die obere Seite des Düsenkopfes hat die Versorgungsanschlüsse, wobei beim Sauerstoffschneidbrenner der Anschluß des Schneidsauerstoffes und die Verbindungsbohrung fluchtend gegenüber der Schneidsauerstoffbohrung der Brennschneiddüse liegt und die Versorgungsanschlüsse für andere Medien mit allen, auch anderen in den Düsenkopf eingesetzten Brennschneid-, Heiz- und Strahldüsen durch versetzte und schräge Bohrungen verbunden sind. Der Düsenkopf ist durch Zufluß, Durchfluß und Abfluß von Wasser, Gas oder anderem Kühlmittel gekühlt.

2. Langzeit- und Mehrzweck-Hochleistungsschneidbrenner für das thermochemische Unterteilen von Werkstücken nach Anspruch 1, dadurch gekennzeichnet, daß bei einem runden, rechteckigen oder mehr quadratischen Düsenkopf und bei mehr als einer außermittig eingesetzten Schneiddüse, diese sich auf einem oder mehr Teilkreisen in einem vorteilhaften Winkelmaß, z. B. 90° bei 4, 120° bei 3 und 180° für 2 Schneid- oder Heizdüsen zueinander befinden, bei länglichem Düsenkopf in Einer-, Zweier- oder Dreierreihe parallel oder um halben Abstand verschoben ein vorteilhafter Mittenabstand von etwa dem eineinhalbfachen des größten Düsendurchmessers z.B. des Eckenmaßes des Schrauben- oder Muttersechskantes für die Düsenbefestigung gewählt ist.

3. Langzeit- und Mehrzweck-Hochleistungsschneidbrenner für das thermochemische Unterteilen von Werkstücken nach einem der Ansprüche 1 und 2, dadurch gekennzeichnet, daß bei größerer Länge des Brenners der Düsenkopf aufgeteilt in entweder einen Düsenkopf mit von oben eingelöteten bzw. eingeschraubten Versorgungsrohren, Schaftrohr mit abschließender Anschlußplatte und Deckelplatte mit Deckelmutter oder anderer Verschraubung oder einen Düsenkopfkörper, angeschraubt an einen Düsenkopfflansch mit eingelöteten bzw. eingeschraubten Versorgungsrohren, Schaftrohr mit abschließender Anschlußplatte und Deckelplatte mit Deckelmutter oder anderer Verschraubung in einen Düsenkopf unten und einen Brennerkörper oben durch Rohre, eingeschraubt oder eingelötet verbunden sind. Dabei bleibt das jeweilige Schneidsauerstoffrohr genau in Flucht mit Versorgungsanschluß und Schneidsauerstoffbohrung der jeweiligen Düse.

4. Langzeit- und Mehrzweck-Hochleistungsschneidbrenner für das thermochemische Unterteilen von Werkstücken nach einem der Ansprüche 1 bis 3, dadurch gekennzeichnet, daß Düsenkopf und Brennerkörper außer durch die Versorgungsrohre auch durch eine stabile Achse verbunden sind, die ein Drehen der vorstehenden Brennerteile in einem festen Brennermantel erlaubt oder die auch durch eine Hohlachse oder Durchgangsbohrung durchdrungen sind, durch die eine ortsfeste oder drehbare Achse führt, die als Zündflammenbrenner ausgebildet sein kann, und die unterhalb der Schneiddüsen eine entsprechend geformte Schutzplatte aus hitzebeständigem Material zum Schutz der nicht arbeitenden Düsen gegen Beiflammen und Schlackespritzer oder auch zum Sichern und Hinleiten schwacher Zündflammen zu den Arbeitsdüsen trägt.

5. Langzeit- und Mehrzweck-Hochleistungsschneidbrenner für das thermochemische Unterteilen von Werkstücken nach einem der Ansprüche 1 bis 4, dadurch gekennzeichnet, daß zwischen dem Brennerkopf und jeder Schneiddüse in den zwischen beiden vorhandenen oder vorgesehenen Spalt eine flache Sicherungsscheibe zum Schutz der Brennerkopfunterseite und zur Anzeige von Düsenanschlußschwierigkeiten vorzugsweise aus hitzebeständigem aber druckempfindlichem Material eingelegt ist.

6. Langzeit- und Mehrzweck-Hochleistungsschneidbrenner für das thermochemische Unterteilen von Werkstücken nach einem der Ansprüche 1 bis 5, dadurch gekennzeichnet, daß der Brenner als Ganzes oder in Teilen schieb- und drehbar gelagert ist und durch einen Schiebe- und Drehantrieb verstellt werden kann, damit die arbeitende Schneiddüse genau auf eine gewünschte Schneidlinie eingestellt oder durch eine andere im Brenner vorhandene Schneiddüse mittels Drehen oder Verschieben ausgetauscht und der Abstand zwischen zwei zeitweise gleichzeitig arbeitenden Schneiddüsen je nach Materiallage und Arbeitsrichtung verstellt werden kann.

7. Langzeit- und Mehrzweck-Hochleistungsschneidbrenner für das thermochemische Unterteilen von Werkstücken nach einem der Ansprüche 1 bis 6, dadurch gekennzeichnet, daß der Antrieb zum Verschieben, Verdrehen oder sonstiger einstellender Bewegung des Brenners aus einer am Brennerumfang wirkenden Schubstange mit schrittweise schaltbarem Schubelement auf einer den verschiebbaren Haltearm in einer Führung tragenden Verstellplatte besteht; die Schubstange eine eigene Führung besitzt und durch Drehendstellungen für die leicht bewegliche Brennerdrehung in die eine oder andere Richtung eine sich anschließende, schwerer bewegliche Verschiebung bewirken kann.

8. Langzeit- und Mehrzweck-Hochleistungsschneidbrenner für das thermochemische Unterteilen von Werkstücken nach einem der Ansprüche 1 bis 7, dadurch gekennzeichnet, daß die Versorgung des Brenners mit Kühlwasser und Gasen mit der Schneiddüsenzahl entsprechenden ausreichend langen, platz- und funktionsgerecht vorgeformten, elastischen Edelstahlrohren besteht, die in die Anschlußplatte, besser jedoch abschraubbare Deckelplatte am Eingang des Brenners eingelötet sind, am anderen Ende in eine ebenso zu einem Verteilerblock der Gasversorgungseinrichtung passende Deckelplatte.

9. Langzeit- und Mehrzweck-Hochleistungsschneidbrenner für das thermochemische Unterteilen von Werkstücken nach einem der Ansprüche 1 bis 8, dadurch gekennzeichnet, daß mindestens der Düsenkopf oder der Brennerflansch oder das Schaftrohr und der Brennerkörper mit symmetrischen Griffflächen, Schlüsselbohrungen oder anderen Möglichkeiten zum einstellenden Drehen um die Längsachse und mit einem Stellring oder höhenverstellbarem Flansch oder ähnlich und zur längenbestimmenden, drehbaren Aufhängung in einer Halterung an einem Gerät oder an einer Maschine versehen sind.

10. Langzeit- und Mehrzweck-Hochleistungsschneidbrenner für das thermochemische Unterteilen von Werkstücken nach einem der Ansprüche 1 bis 9, dadurch gekennzeichnet, daß ein kombinierter, zweiarmiger, vierarmiger oder runder, tellerartiger Drehschlüssel für das Brennerdrehen und das Ein- und Ausschrauben von Düsen zur Vermeidung von Biegekräften vorgesehen ist.

11. Langzeit- und Mehrzweck-Hochleistungsschneidbrenner für das thermochemische Unterteilen von Werkstücken nach einem der Ansprüche 1 bis 10, dadurch gekennzeichnet, daß die unterhalb des Schneidbrenners bzw. der Schneiddüsen angeordnete Schutzplatte auf der den Schneiddüsen zugewandten Fläche ein an die Schneiddüsen-Austrittsfläche angedrücktes Werkzeug trägt, das zum Reinigen der Schneiddüsen gegen diese verdreht oder verschoben werden kann.

4  5  9  10  11  5  9  6

14

7

1

59

2

A–A          13          12          Bild 1

3  1          2  12

A          A

2  13  11  2          Bild 2

10

8

7

13

3

1

59

2

2

12

B–B

13

Bild 3

8

4

5

6

7

S ← → S

B

B

Bild 4

9

Bild 5

Bild 6

Bild 7

Bild 8

Bild 9

Bild 10

24  25  11  22  21

22

23

15

14

9

26

17

9

27

28

29

1

2   24  11  25  12

Bild 11

Bild 12

Bild 13

Bild 14a

Bild 14b

Bild 15

Bild 16

Bild 17

Bild 18

57  56

58    55

56

57

Bild 19

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0151683 (UNION CARBIDE CORP.) <br> * Seite 5, Zeile 20 – Seite 9, Zeile 14; Figuren 1, 2 * <br> --- | 1 | B23K 7/10 <br> F23D 14/78 |
| A | BE-A-882638 (CENTRE DE RECHERCHES METALLURGIQUES) <br> * Ansprüche 1-3; Figur 1 * <br> ----- | 1 | |
| | | | **RECHERCHIERTE SACHGEBIETE (Int. Cl.5 )** <br><br> B23K <br> F23D |

Der vorliegende Recherchenbericht wurde für alle Patentansprüche erstellt

| Recherchenort | Abschlußdatum der Recherche | Prüfer |
|---|---|---|
| BERLIN | 11 SEPTEMBER 1991 | WUNDERLICH J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)